# EUROPEAN PATENT APPLICATION

(11) **EP 4 775 383 A1**
(43) Date of publication of application: **15.07.2026**
(21) Application number: 25206306.0
(22) Date of filing: 02.10.2025
(51) Int. Cl.: B29C 65/14, B29C 63/02, B29C 65/48, B29C 65/52, B29C 65/78, B29C 65/00, B29L 31/00, B29L 31/10

(54) **MACHINE AND METHOD FOR WRAPPING PROFILES BY A WRAPPING FILM**

(30) Priority: 10.01.2025 IT 202500000297
(71) Applicant: W.P.R. S.r.l., 31027 Spresiano (IT)
(72) Inventor: BALDASSIN, Remo, 31027 Spresiano (TV) (IT)
(74) Representative: Studio Torta S.p.A.

(57) **Abstract**

Profile wrapping machine (1) configured to wrap profiles (2) based on a plastic polymer by means of a wrapping film (3), The profile wrapping machine comprises a surface treatment apparatus (11), which is arranged along a feed path (F) of the profiles (2) and irradiates the surface (2a) of the profile (2) by means of ultraviolet radiation, to clean it from impurities and to chemically activate it.

## Description

### CROSS-REFERENCE TO RELATED APPLICATIONS

This patent application claims priority from Italian patent application no. 102025000000297 filed on January 10, 2025, the entire disclosure of which is incorporated herein by reference.

### BACKGROUND

The present invention relates to a machine and method for wrapping profiles by a wrapping film.

In more detail, the present invention concerns a machine and method configured so as to couple/attach/fix, in a preferably continuous way, a decorative sheet or film of wrapping rolled on a reel, to/on an outer surface of a profile, by means of a bonding/adhesive fixing mixture, preferably hot, so as to obtain a wrapped profile, usable, for example, for a skirting board, and/or a windowsill, and/or a component part of a fixture of a door/window or similar, to which the description that follows will refer explicitly, but without thus losing its general nature.

As is known, machines for manufacturing wrapped profiles of the type cited above, indicated below as wrapping machines, typically comprise: a roller conveying device structured to move profiles on command, one after the other, between an inlet and an outlet of the machine along a straight and horizontal feeding direction, and a fixing unit of the film, which is arranged in an intermediate position along the feeding direction above the rollers, and is structured to unwrap the film from a reel, spread a preheated liquid glue on a fixing face of the unwrapped film, stably attach the fixing face of the film spread with glue onto a surface of the profile to be wrapped during the feeding thereof, and then heat and press the film against the underlying profile, so as to stably fix the wrapping film to said profile.

Machines for wrapping profiles, especially those made of polyvinyl chloride (PVC), are also typically provided with a surface treatment apparatus, which is configured so as to deposit a primer formed of a solvent/pre-dosed resin mixture on the outer surface of the profile intended to be subjected to bonding of the film.

Application of the primer on the profile cleans residues and impurities off the surface thereof, the presence of which negatively affects the subsequent step of bonding of the film, and activates the surface.

Certain surface treatment apparatuses comprise swabs that deposit the primer on the surface of the profile during advancement of the profile. The primer penetrates and chemically attacks the surface of the profile, so as to perform both a cleaning treatment and a surface activation treatment to facilitate bonding of the film.

There are multiple technical problems associated with use of primer in the current wrapping machines.

The swabs must be replaced with a certain frequency, especially when they reach a condition of wear and/or saturation with primer and/or with other substances present on the profile. Frequent replacement of the swabs is particularly inconvenient, as it results in machine shut-downs that negatively affect the production costs.

Furthermore, the use of partially worn or saturated swabs causes an incorrect distribution of the primer on the surface to be wrapped, which undermines correct fixing of the film on the profile, and causes, on the one hand, a negative impact on the quality of the wrapping and, on the other, an increase in non-compliant wrapped profiles, which have to be discarded.

In addition, supplying further primer to a saturated swab causes an uncontrolled dispersion of the primer being deposited, and therefore in critical parts/components of the machine, causing damage to them.

Furthermore, programming of the wrapping machine to dose the correct quantity of primer to be spread on the profile using swabs requires lengthy, complex and therefore costly operations.

Surface treatment apparatuses that deposit the primer on the profile in vacuum conditions are also known. These surface treatment apparatuses also have various technical drawbacks: they do not, in fact, allow accurate adjustment of the primer during its application to the profile; they do not allow the use of just any primer, but, vice versa, are limited to primers having a reduced degree of efficacy (not very aggressive), characterised by a weak and at times incomplete surface aggression that substantially prejudices the stability of fixing of the film; they are subject to quantitative errors due to the dimensional differences of the profiles (tolerances); they are subject to a high dispersion of primer, since the vacuum chamber accelerates evaporation of the primer, with all the consequences that this involves in terms of environmental impact.

It is also opportune to highlight that recent regulations governing the emission of volatile organic compounds (VOCs) have imposed substantial restrictions on the use of the permitted types of primer, limiting them to the category based on high-boiling solvents. However, high-boiling solvent-based primers have a lower cleaning and activating efficacy than traditional primers and require more time for drying. Insufficient drying does, in fact, undermine the subsequent bonding of the film onto the profile.

In order to overcome the problems of high-boiling solvent-based primers, it has therefore been necessary to increase the drying times of the profiles through an elongation of the drying section of the wrapping machine and to increase the level of drying, for example by using more powerful and/or additional electric heating devices. The use of high-boiling solvent-based primers therefore causes further technical problems in traditional machines, such as, on the one hand, an inconvenient increase in the overall length of the wrapping machine and, on the other, an increase in the electricity consumption thereof, in addition to increased manufacturing costs.

Lastly, it is also known that several manufacturers of wrapping for profiles apply the primer on the fixing face intended for bonding with the profile, so as to increase the efficacy of the subsequent step of bonding it onto the profile. However, the application of primer directly onto the film accelerates the ageing thereof and shortens the useful period for applying it onto the profiles. Lastly, application of the primer onto the film makes it necessary to store the pretreated film in an environment with controlled temperature and humidity, and involves a complex management of the use-by dates of said films.

### DESCRIPTION OF THE INVENTION

The object of the present invention is therefore to obtain a machine for wrapping profiles by a wrapping film that is free from the drawbacks described above.

In accordance with this object, according to the present invention, a profile wrapping machine is obtained and a method for wrapping profiles is provided, according to what is defined in the relative independent claims and preferably, but not necessarily, in any one of the claims dependent thereupon.

The claims describe preferred embodiments of the present invention and form an integral part of this description.

### BRIEF DESCRIPTION OF THE DRAWINGS

The present invention will now be described with reference to the appended drawings, which illustrate a non-limiting embodiment thereof, wherein:
- Figure 1 shows a perspective view, with parts removed for clarity, of a profile wrapping machine obtained according to the dictates of the present invention,
- Figure 2 is a view in side elevation, with parts removed for clarity, of the profile wrapping machine shown in Figure 1,
- Figure 3 is a plan view, with parts removed for clarity, of the profile wrapping machine shown in Figures 1 and 2,
- Figure 4 shows a view in front elevation of the profile wrapping machine shown in Figure 1, which shows the apparatus for surface treatment of the profiles,
- Figure 5 is a perspective view on an enlarged scale of an apparatus for surface treatment of profiles used in the profile wrapping machine shown in Figures 1 to 4,
- Figure 6 shows schematically an apparatus for surface treatment of profiles of the profile wrapping machine that is the object of the present invention,
- Figure 7 shows schematically another embodiment of an apparatus for surface treatment of profiles in the profile wrapping machine that is the object of the present invention,
- Figure 8 shows a perspective view on an enlarged scale, and with parts removed for clarity, of an apparatus for surface treatment of a film used in the profile wrapping machine shown in Figure 1, and
- Figure 9 shows schematically the apparatus for surface treatment of a film used in the profile wrapping machine that is the object of the present invention.

### DESCRIPTION OF EMBODIMENTS

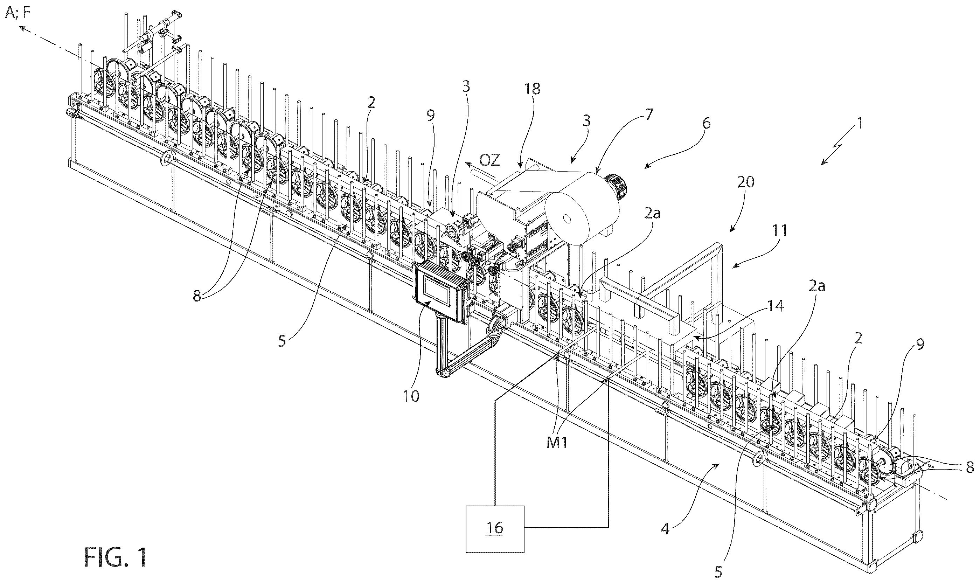

With reference to Figure 1, the number 1 denotes, in its entirety, a profile wrapping machine, which is configured so as to cover/wrap the profiles 2 by means of a film 3.

The film 3 comprises a decorative wrapping sheet. Preferably, the film 3 comprises a continuous tape formed of a thin and highly flexible film and is based on at least one plastic polymer. Preferably, the film 3 has a multilayer structure. One of the layers of the film 3, indicated here below as the base-layer (not shown), can be made of polyvinyl chloride and have a fixing face 3a configured so as to be fixed permanently onto the surface 2a (to be wrapped) of the profile 2, and a decorative face opposite to the fixing face 3a, adapted to remain visible. Preferably, another layer of the multilayer film 3 (not shown), can be obtained by means of a transparent plastic material, preferably based on polymethyl methacrylate (PMMA) and is fixed onto the decorative face of the base-layer.

It is opportune to note that, in the description that follows, the term "profile" will be intended as an element or profile that can have substantially the shape of a bar or rod and/or the plate-like shape of a flat panel, for example, rectangular, or similar shapes. Furthermore, in the description that follows, the term profile means a shaped element or profile for preferably obtaining a fixture/fitting of a window/door, and/or a home furnishing element (item of furniture), and/or a skirting board, and/or a windowsill, or similar elements.

According to a preferred embodiment, the profile 2 is straight. Preferably, the profiles 2 can be obtained by means of an extrusion process, i.e. they can be extruded profiles. Preferably, the profiles 2 are based on one or more plastic polymers. Preferably, the profiles 2 are based on polyvinyl chloride (PVC) and/or based on polypropylene (PP) and/or based on any similar polymeric material.

With reference to Figure 1, the profile wrapping machine 1 comprises a support frame 4 that extends along a longitudinal axis A and, in the example shown, is resting on the underlying plane.

The profile wrapping machine 1 further comprises a conveyor unit or device 5, preferably supported stably by the frame 4. The conveyor device 5 is configured to move, i.e. to displace, the profiles 2 on command in a row with each other, one after the other, above the frame 4, between an inlet and an outlet of the profile wrapping machine 1 in a pre-established direction (towards the outlet), along a feed path F substantially parallel to the longitudinal axis A, and conveniently straight.

The profile wrapping machine 1 further comprises at least one film fixing apparatus or device 6 (only partially shown in Figure 1), which is configured so as to stably fix at least one film 3 onto the surface 2a of the profile 2. In the example shown, the film fixing device 6 is supported by the frame 4, in a manner to be arranged above the profiles 2 along the feed path F.

The film fixing unit 6 is configured so as to: unroll in a controlled manner at least one film 3 wound on a relative reel 7 mounted on a shaft rotating around an axis (for example, an idler shaft); receive an adhesive mixture or a bonding mixture, preferably heated, liquid or semi-liquid (glue); apply, for example spread, the bonding mixture onto a fixing face 3a of the film 3; attach/couple the fixing face of the film 3 permanently onto the surface 2a to be wrapped of the profile 2 during advancement of the profile 2, so as to cover it; preferably, heat the profile 2 and/or the film 3, and/or press the film 3 so as to fix it uniformly onto the surface 2a of the profile 2, and/or cut the film 3 at the end of the profile 2.

It is understood that the profile wrapping machine 1 of the present invention is not limited to the use of a single film fixing device 6 that provides for fixing of one film 3, but, as an alternative or in addition, can comprise a series of film fixing devices 6 that are configured so as to apply respective films 3 onto the same number of surfaces 2a of the profile 2 in order to wrap them. For example, one or more film fixing devices 6 can be arranged above the profile 2 in order to wrap the upper surface 2a; one or more film fixing devices 6 can be arranged laterally to the profile 2 to wrap the side surface(s) 2a.

The conveyor device 5 can comprise a plurality of wheels or rollers 8 configured to receive and move the profiles 2 in the profile wrapping machine 1 along the feed path F. Preferably, the rollers 8 are mounted one after the other preferably on the frame 4, so as to rotate freely around the relative rotation axes, preferably parallel/coplanar to each other and transverse to the longitudinal axis A. Preferably, the rollers 8 are motorised, i.e. they are dragged in rotation by relative drive units 9 which, in the example shown, comprise known electric motors and/or motion transmission mechanisms (not shown).

The profile wrapping machine 1 further comprises an electronic control unit 10 that is configured to control the functioning thereof. The electronic control unit 10 can control the drive units 9 through electric commands, so as to regulate/control the rotation speed of the feed rollers 8 and therefore the displacement speed of the profiles 2 along the feed path F, based on setting parameters and/or a wrapping control operating program that is stored in an electronic memory (not shown) associated with said electronic control unit 10.

According to the present invention, the profile wrapping machine 1 further comprises at least one surface treatment apparatus 11, which is arranged along the feed path F and is configured to emit ultraviolet radiation towards/against the surface 2a of the profile 2 intended to be subjected to bonding with the film 3, so as to clean it from impurities, residues and similar, and to chemically activate it to facilitate bonding of the film 3 onto the surface 2a.

The applicant has found that irradiating the surface 2a of the profile 2 by means of ultraviolet radiation a surface disassociation (chemical separation) of the impurities/contaminants from the polymeric material of the profile 2 is obtained, which conveniently results in a surface cleaning treatment of the profile 2 and a chemical activation that improves bonding of the film 3.

In other words, the applicant has found that irradiating the surface 2a by means of ultraviolet radiation a cleaning thereof from impurities of various type, such as, for example, residues of releasing agents, lubricants, waxes, paraffins or similar, is obtained. The high energy of the ultraviolet radiation causes breakage of the chemical bonds on the surface 2a of the profile 2, which results in both cleaning and chemical activation thereof that improves bonding with the film 3.

A technical effect obtained thanks to irradiation of the profile 2 with ultraviolet radiation is complete elimination of the use of primer for cleaning and chemically activating the surface of the profile 2. Another technical effect obtained is complete elimination of the use of swabs in the profile wrapping machine 1. Another technical effect obtained is complete elimination of the use of complex and costly vacuum systems in the profile wrapping machine 1.

According to one embodiment, the surface treatment apparatus 11 is configured to selectively emit ultraviolet radiation onto the surface 2a of the profile 2, having a wavelength of less than about 350 nm (nanometres).

The applicant has, in fact, found that irradiating the surface 2a of the profile 2 with ultraviolet radiation having a wavelength of less than about 350 nm a greater disassociation of impurities from the surface 2a and a greater chemical activation are obtained. The greater disassociation therefore conveniently results in a greater surface cleaning of the profile 2, whereas the greater chemical activation improves bonding.

According to a preferred embodiment, the surface treatment apparatus 11 is also configured to selectively emit ultraviolet radiation onto the surface 2a of the profile 2, having a wavelength of less than about 240 nm.

The applicant has found that irradiating the surface 2a of the profile 2 with ultraviolet radiation on the surface 2a of the profile 2, having a wavelength of less than about 240 nm, not only a greater disassociation of the impurities from the surface 2a and therefore a greater cleaning is obtained, but also (indirectly) a chemical activation on the surface 2a of the profile that further improves bonding of the film 3 onto the surface 2a itself.

The applicant has, in fact, found that irradiating the surface 2a of the profile 2 with ultraviolet radiation having a wavelength of less than about 240 nm in the air surrounding the profile 2 a generation of ozone and a disassociation of oxygen are obtained. It has been found that the ozone and the mono-atomic oxygen generated by the ultraviolet radiation in the air chemically attack the surface 2a, generating chemical groups that are functional to bonding.

The applicant has found that the ozone and the mono-atomic oxygen generated in the air by the ultraviolet radiation chemically attack the surface 2a of the profile 2 based on polyvinyl chloride (PVC) and/or based on polypropylene (PP). The ultraviolet radiation opens several chemical bonds of the polymer of the profile 2 and the concomitant presence of oxygen and mono-atomic ozone on the open bonds leads to the formation of at least the following chemical groups functional to bonding: the chemical group COH, and/or the chemical group COOH, and/or the chemical group OH. The chemical groups obtained on the surface 2a by the synergistic action of the ozone, the mono-atomic oxygen and the ultraviolet radiation further improve the chemical interaction between the surface 2a and the bonding material and therefore further improve fixing of the film 3 on the profile 2. In particular, the applicant has found that the ozone and the oxygen generated in the air by means of ultraviolet radiation and the action of them causes a chemical and physical activation of the surface 2a that increases the level of wetting of the surface 2a itself. An increase in the level of wetting results conveniently in an increase in the level of clinging on the surface 2a of the bonding material present on the fixing face 3a of the film 3.

According to the present invention, the surface treatment apparatus 11 comprises one or more emitting sources 12, which are configured to emit the ultraviolet radiation in order to irradiate the surface 2a of the profiles 2.

According to the present invention, the emitting sources 12 are arranged so as to be immediately behind the surface 2a of the profile 2. Preferably, the emitting sources 12 can be arranged at a distance comprised between around 1 mm and around 10 mm from the surface 2a.

According to the present invention, the emitting sources 12 can be arranged on the machine 1 so as to emit a near-planar beam of ultraviolet radiation, transverse to the longitudinal axis A. In use, the beam of ultraviolet radiation is crossed by profiles 2 one after the other during advancement thereof in the direction F and continuously irradiates the surface 2a of each profile 2.

The emitting sources 12 can be arranged, one alongside the other, so as to surround the profile 2 on one or more planes transverse to the feed direction F. Preferably, the emitting sources 12 can be arranged so as to selectively irradiate the surface 2a of the profile 2 intended to be fixed with the film 3 and not irradiate the remaining surface of the profile 2, which remains free from the film 3.

The emitting sources 12 can conveniently comprise one or more lamps and/or LED UVC devices (which emit ultraviolet radiation in the UV-C band), and/or lamps and/or LED UVB that emit ultraviolet radiation in the UV-B band, and/or UV lamps for sanitisation (which emit ultraviolet radiation in the wavelength band less than 350 nm, and/or less than 240 nm).

The emitting sources 12 can further comprise, as an alternative or in addition, excimer lamps. The applicant has found that the use of excimer lamps is particularly advantageous, since it results in both the surface cleaning and the surface activation functional to bonding. More preferably, the use of excimer lamps generating ultraviolet radiation having a wavelength of about 172 nm is particularly effective thanks to the high energy thereof, both for performing surface cleaning and for chemically attacking the surface 2a so as to increase its functionality to bonding.

According to one embodiment, the emitting sources 12 can be integrated into one or more LED UV (Ultra Violet) strips. The LED UV strips can be shaped on the basis of the transverse perimeter cross-section of the profile 2, so as to be adjacent to it.

As an alternative or in addition, according to one embodiment, the emitting sources can have an elongated tubular shape and be arranged approximately parallel to the longitudinal axis A of the machine 1 above the profile 2 and/or laterally to it, based on the position of the surface 2a intended to be wrapped with the film 3.

The surface treatment apparatus 11 can preferably further comprise reflecting devices 15 configured to reflect the ultraviolet radiation. The reflecting devices 15 are configured to reflect and/or convey and/or divert the ultraviolet radiation emitted by the emitting sources 12 towards the surface 2a of the profile 2. The reflecting devices 15 can comprise, for example, mirrors or reflecting surfaces and/or optical devices, which are arranged adjacent to the emitting sources 12 and are shaped to reflect the ultraviolet radiation towards/against the surface 2a.

According to the present invention, the surface treatment apparatus 11 can further comprise: a treatment tunnel or chamber 14 that is configured in order to be internally traversed by the profiles 2 as they move along the feed path F, and a nitrogen feeder device 16 configured to feed a nitrogen-air based mixture M1 into the chamber 14. The treatment chamber 14 is structured to ensure that the nitrogen-air based mixture M1 fed inside it occupies at least the space comprised between the surface 2a and the emitting sources 12.

The applicant has found that varying in a controlled way the quantity of nitrogen (for example, the percentage in the mixture M1) present in the treatment chamber 14 during emission of the ultraviolet radiation towards the profile 2 control of the ozone and reactive oxygen present in the treatment chamber 14 itself is obtained. An increase in the nitrogen results, for example, in a corresponding reduction of the ozone and the reactive oxygen. Vice versa, a reduction in nitrogen results in an increase in ozone and reactive oxygen.

According to one embodiment, the electronic control unit 10 is configured to control the nitrogen feeder device 16 to vary/modulate the quantity of nitrogen-air based mixture M1 supplied to the treatment chamber 14 and present in it. Control of the nitrogen can be performed on the basis of various parameters, such as: the distance of the emitting sources 12 from the surface 2a, and/or the quantity of ozone and/or reactive oxygen present in the treatment chamber 14, and/or the type of adhesive material, and/or the material of the profile 2.

According to the present invention, the emitting sources 12 are arranged so as to emit the ultraviolet radiation on the surface 2a inside the treatment chamber 14 so as to cross the mixture M1 of nitrogen, air and ozone OZ present in the treatment chamber 14 itself. Preferably, the emitting sources 12 are arranged stably inside the treatment chamber 14 and are oriented so as to emit ultraviolet radiation on the surface 2a.

The additional technical effect obtained thanks to injection of nitrogen is that of guaranteeing cleaning of the emitting sources 12 and attenuating/reducing the operating temperature thereof. A further technical effect of the presence of nitrogen is the possibility of increasing the distance between the emitting sources 12 and the surface 2a, thanks to the reduction in the percentage of oxygen and ozone in the treatment chamber 14.

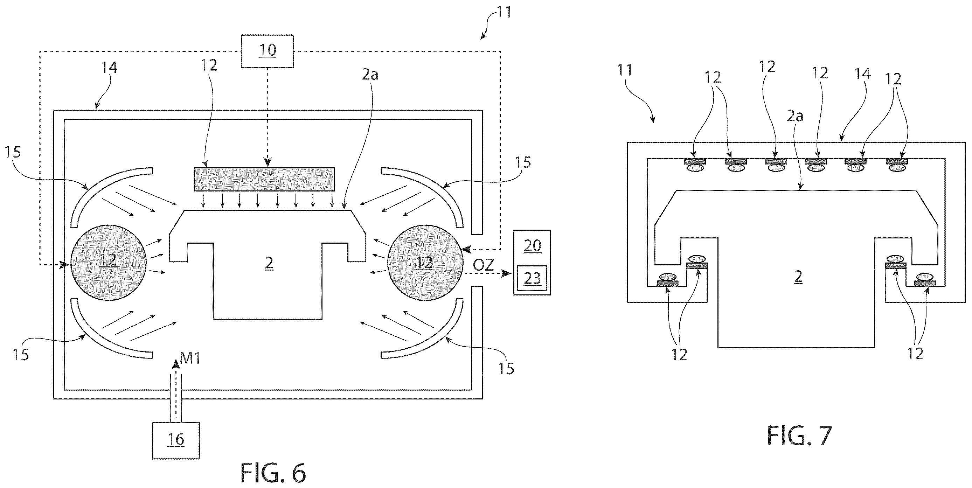

According to a possible embodiment shown in Figure 6, the surface treatment apparatus 11 further comprises an ozone abatement system 20, which is configured to control the quantity (for example, the percentage) of ozone present in the treatment chamber 14, in order to keep it below a pre-established threshold. According to one example of an embodiment, the ozone abatement system 20 is aeraulically connected to the treatment chamber 14 and is configured to perform a suction from it. Preferably, the ozone abatement system 20 is configured to suck out, in a controlled manner, the ozone OZ generated in the air irradiated by the ultraviolet radiation. More preferably, the ozone abatement system 20 is configured to suck out the ozone OZ in the treatment chamber 14 when the ozone OZ exceeds the pre-established threshold. Conveniently, the excess ozone OZ can be sucked from the upper part of the treatment chamber 14.

The surface treatment apparatus 11 can further conveniently comprise a catalyst system 23 that is configured to be arranged in contact with the ozone OZ generated by the ultraviolet radiation to disassociate the ozone. Disassociation of the ozone regenerates the oxygen (molecular) and therefore reduces the percentage of ozone present in the treatment chamber 14. According to an example of an embodiment shown in Figure 6, the catalyst system 23 is included in the ozone abatement system 20.

The technical effect obtained thanks to controlled abatement of the ozone is that of keeping under control the quantity of ozone that is generated by the ultraviolet radiation during the process of cleaning the profile 2. In this manner, the conditions that are hazardous for human health that could occur in a condition of uncontrolled generation of ozone are avoided.

With reference to the exemplary embodiment shown in Figure 6, the reflecting devices 15 can comprise reflecting faces that are arranged inside the treatment chamber 14 and are facing the surface 2a.

The electronic control unit 10 is configured to control the profile conveyor 5 for advancing the profiles 2 along the feed path F, so as to cross in sequence the surface treatment apparatus 11 and then the fixing device 6. The electronic control unit 10 is further configured to control the emitting sources 12 so as to emit the ultraviolet radiation on the surface 2a when the profiles 2 are advancing along the feeding direction F before contact between the fixing face 3 and the surface 2a of the profile 2 to be wrapped.

Preferably, the electronic control unit 10 is configured to control the emitting sources 12 so as to selectively emit ultraviolet radiation having a wavelength of less than about 350 nm. More preferably, the electronic control unit 10 is configured to control the emitting sources 12 so as to selectively emit ultraviolet radiation having a wavelength of less than about 240 nm. Even more preferably, the electronic control unit 10 is configured to control the emitting sources 12 so as to selectively emit ultraviolet radiation having a wavelength of about 172 nm and/or 222 nm.

More preferably, the electronic control unit 10 is configured to control the emitting sources 12 so as to selectively emit ultraviolet radiation having a wavelength less than 350 nm, or less than 240 nm or about 172 nm, or about 222 nm, based on one or more of the following characteristics: the polymeric material of the profile 2 (for example, PVC or PP material), and/or the material of the film 3, and/or the bonding/adhesive mixture and/or the type of impurities to be cleaned on the surface 2a.

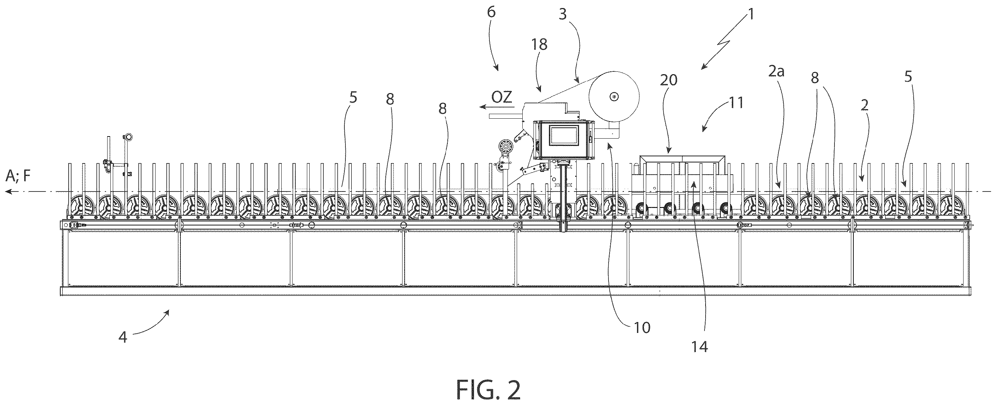

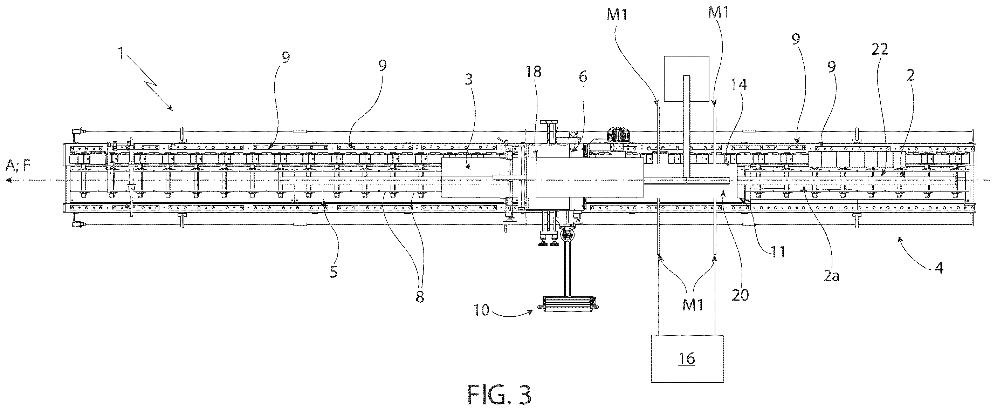

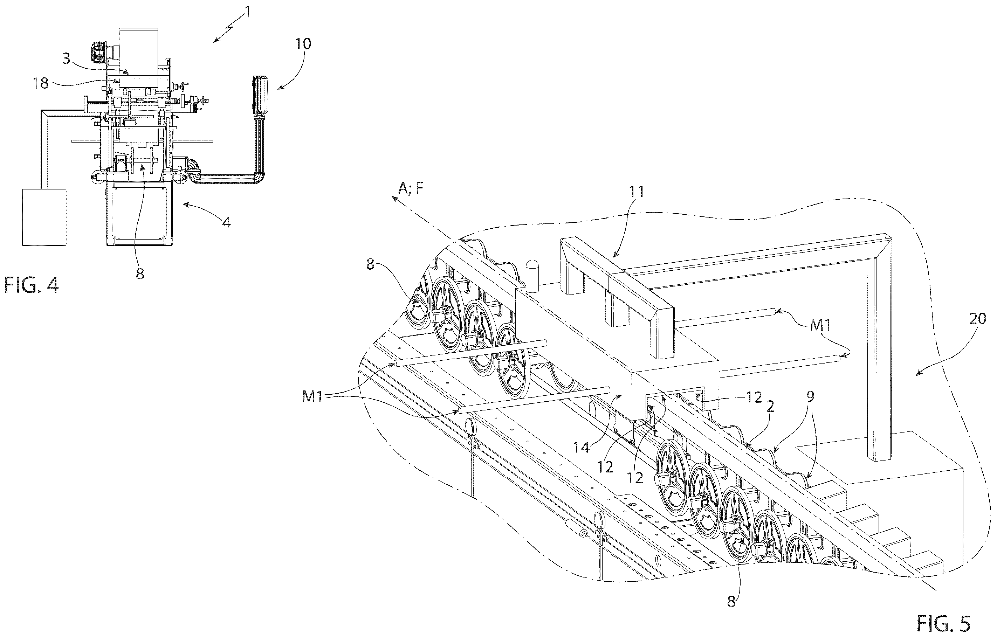

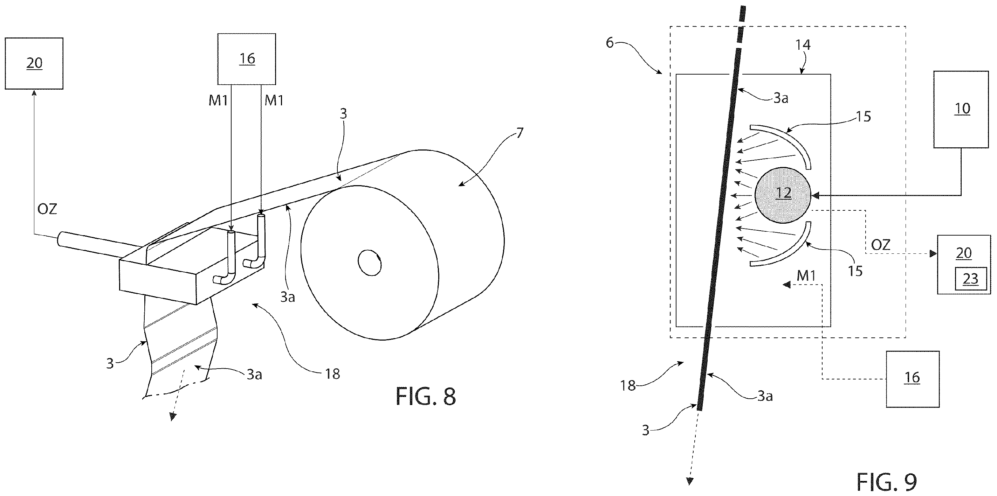

With reference to Figures 8 and 9, the wrapping machine 1 further comprises a surface treatment apparatus 18 that is similar to the surface treatment apparatus 11 and the component parts of which will be indicated, where possible, with the same reference numbers used to indicate corresponding parts of the surface treatment apparatus 11 described above and shown in Figures 1-7.

The surface treatment apparatus 18 is arranged along the feed path F and is configured to irradiate the fixing face 3a of the wrapping film 3 by means of ultraviolet radiation. The fixing face 3a of the wrapping film 3 is irradiated with ultraviolet radiation before application of the glue on the fixing face 3a of the film 3 (and before application thereof onto the surface 2a). The surface treatment apparatus 18 is preferably arranged along the feed path F downstream of the surface treatment apparatus 11.

The technical effect obtained is completely eliminating the use of primer pre-applied on the film 3. This effect, in addition to simplifying manufacture of the film, since it eliminates a primer application operating step, on the one hand, also lengthens the lifetime and use of the film 3 and, on the other, does not require storage of the wrapping films in environments with controlled temperature and humidity, thus reducing the complexity and operating costs of the films.

Conveniently, the surface treatment apparatus 18 is comprised in the fixing device 6 and is arranged upstream of the film bonding head, preferably between this and the reel 7.

According to a preferred embodiment, one or more emitting sources 12 of the surface treatment apparatus 18 are controlled by the electronic control unit 10 to selectively emit the ultraviolet radiation on the fixing face 2a having a wavelength: less than 350 nm; preferably less than 240 nm; more preferably about 172 nm or 222 nm.

The emitting source or sources 12 of the surface treatment apparatus 18 can conveniently be arranged so as to be adjacent to the fixing face 3a of the film 3. The sources 12 of the surface treatment apparatus 18 are arranged so as to emit a flat radiation beam transverse to the advancement direction of the film 3, in order to be crossed by the film 3 when it advances and thus to continuously irradiate the fixing face 3a.

According to a possible embodiment, the surface treatment apparatus 18 comprises a relative treatment chamber 14, containing the emitting source/sources 12.

According to a possible embodiment shown in Figures 8 and 9, the nitrogen feeder system 16 feeds the nitrogen-air mixture M1 into the treatment chamber 14 of the surface treatment apparatus 18. According to a possible embodiment shown in Figures 8 and 9, the surface treatment apparatus 18 also comprises a catalyst system 23.

According to a possible embodiment shown in Figures 8 and 9, the ozone abatement system 20 sucks the ozone OZ from the treatment chamber 14 of the surface treatment apparatus 18.

The method of operation of the profile wrapping machine 1 comprises the steps of: moving the profiles 2 by means of the conveyor 5, along the predetermined feed path F from the inlet towards the outlet; continuously irradiating, by means of the surface treatment apparatus 11 (brushing with ultraviolet radiation) the surfaces 2a of the profiles 2, one after the other, by means of ultraviolet radiation during advancement of the profile 2 and before fixing the film 3 onto the surface 2a of the profile 2; preferably continuously irradiating, by means of the surface treatment apparatus 18, the fixing face 3a of the film 3 by means of ultraviolet radiation during advancement of the film 3 and before application of the glue on the fixing face 3a of the film 3 and fixing thereof onto the surface 2a of the profile 2 by means of the fixing device 6.

The profile wrapping machine and the method described here above have numerous advantages.

In the first place, the use of ultraviolet radiation on the profile allows the need to apply primer onto it to be completely eliminated. This allows the swabs to be eliminated from the machine and the technical drawbacks associated with them to be overcome. The absence of swabs advantageously makes it possible to eliminate machine shut-downs for maintenance thereof, reduce costs, eliminate the discards caused by incorrect distribution of the primer in the case of saturation, increase the quality of bonding of the film, eliminate the criticalities and particularly the damage to machine components caused by accidental contact with the primer.

Furthermore, the use of ultraviolet radiation on the film makes it possible both to keep the film in any environment, therefore eliminating the need to store it in special environments with controlled temperature and humidity, and also not to expose the film to ageing, thus increasing the guarantee on bonding and on the quality of fixing on the profile.

Lastly, the use of ultraviolet radiation to clean the profile allows both a reduction in the overall dimensions of the machine, since the drying constraints caused by use of high-boiling primers are overcome, and the energy consumption and therefore the relative costs to be reduced considerably, since it is no longer necessary to use any electric heating device to dry the primer.

In conclusion, it is clear that changes and variants may be made to the profile wrapping machine and the method described and illustrated here without thus deviating from the scope of protection of the present invention.

## Claims

1. Profile wrapping machine (1) configured to wrap profiles (2) in plastic polymer by means of a film (3),
the profile wrapping machine comprises:
a conveyor (5) configured to move the profiles (2) along a predetermined feed path (F),
a film fixing device (6) which is arranged along said feed path (F) and is configured in order to permanently fix a first face (3a) of said film (3) to the surface (2a) of at least one profile (2) by means of an adhesive material,
at least one first surface treatment apparatus (11), which is configured in order to irradiate said surface (2a) of said profile (2) by means of ultraviolet radiation so as to clean said surface (2a) from impurities and chemically activate it, in order to improve bonding of said film (3).

2. A machine according to claim 1, comprising at least a second surface treatment apparatus (18), which is configured in order to irradiate the first face (3a) of the film (3) by means of ultraviolet radiation so as to clean the first face (3a) from impurities and chemically activate it to improve bonding of the film (3).

3. A machine according to claims 1 or 2, wherein the first surface treatment apparatus (11) and/or the second surface treatment apparatus (18) are configured in order to selectively emit ultraviolet radiation having a wavelength of less than about 350 nm.

4. A machine according to any of the foregoing claims, wherein the first surface treatment apparatus (11) and/or the second surface treatment apparatus (18) are configured in order to selectively emit ultraviolet radiation having a wavelength of less than about 240 nm.

5. A machine according to any of the foregoing claims, wherein the first surface treatment apparatus (11) and/or the second surface treatment apparatus (18) are configured in order to selectively emit ultraviolet radiation having a wavelength of about 172 nm and/or 222 nm.

6. A machine according to any one of the foregoing claims, wherein the first surface treatment apparatus (11) is arranged in said machine in order to irradiate said surface (2a) of said profile (2) during the movement of said profile (2) forward), by means of ultraviolet radiation, before the application of the film (3) on the surface (2a) of said profile (2).

7. A machine according to claim 2, and one of claims 3 to 6, wherein the second surface treatment apparatus (18) is arranged in said machine in order to irradiate the first face (3a) of the film (3) by ultraviolet radiation before the application of the adhesive material to the first face (3a) of the film (3).

8. A machine according to any one of the foregoing claims, wherein the first surface treatment apparatus (11) comprises: a treatment chamber (14) configured in order to be internally traversed by said profiles (2) as they move along said feed path (F), and a nitrogen feeder device (16) configured to feed a nitrogen-air based mixture (M1) into the treatment chamber (14).

9. Machine according to claim 8 comprising an ozone abatement system (20) which is aeraulically connected to the treatment chamber (14) to suck out from the same, and/or a catalyst system (23).

10. A machine according to any one of the foregoing claims, wherein the first surface treatment apparatus (11) comprises one or more emitting sources (12) of ultraviolet radiation which are arranged in the machine so as to be approximately adjacent to said surface (2a) of the profile (2).

11. A machine according to claim 2 and any one of claims 3 to 10, wherein the second surface treatment apparatus (18) comprises one or more emitting sources (12) of ultraviolet radiation which are arranged adjacent to the fixing face (3a) of said film (3).

12. Method for wrapping profiles (2) in plastic polymer using a film (3),
wherein the method comprises the steps of:
moving the profiles (2), by means of a conveyor (5), along a predetermined feed path (F),
firmly fixing the coating film (3) on the surface (2a) of at least one profile (2) by means of an adhesive material, by means of a fixing device (6) which is arranged along said feed path (F),
irradiate said surface (2a) of said profile (2) by means of ultra-violet radiation so as to clean said surface (2a) from impurities and chemically activate said surface (2a) to improve bonding of said film (3).

13. Method according to claim 12, comprising the step of irradiating the first face (3a) of the film (3) by means of ultraviolet radiation so as to clean the first face (3a) from impurities and chemically activate it to improve bonding of the film (3).

14. Use of ultraviolet radiation to clean and chemically activate a surface (2a) of a profile (2) based on a plastic polymer, without using a primer.

15. A surface treatment apparatus (11) configured to be installed in a profile wrapping machine (1) which is configured to wrap profiles (2) of plastic polymer by means of a coating film (3),
the profile wrapping machine (1) comprises: a conveyor (5) configured to move the profiles (2) along a predetermined feed path (F), a film fixing device (6), which is arranged along the feed path (F) and is configured to permanently fix the coating film (3) to the surface (2a) of at least one profile (2) by means of an adhesive material,
the surface treatment apparatus (11) is configured in order to irradiate the surface (2a) of the profile (2) by means of ultraviolet radiation so as to clean the surface (2a) from impurities and chemically activate it to improve the bonding of the film (3).
